# EUROPÄISCHE PATENTSCHRIFT

(11) **EP 1 000 806 B1**
(45) Veröffentlichungstag und Bekanntmachung des Hinweises auf die Patenterteilung: **24.10.2007**
(21) Anmeldenummer: 99122182.1
(22) Anmeldetag: 06.11.1999
(51) Int. Cl.: B60Q 11/00

(54) **Diagnosesystem für eine LED-Leuchte in einem Kraftfahrzeug**
Diagnostic system for vehicle LEDs light
Procédé de diagnostic pour des feux à LEDs dans un véhicule

(30) Priorität: 13.11.1998 DE 19852351
(43) Veröffentlichungstag der Anmeldung: 17.05.2000
(73) Patentinhaber: Hella KGaA Hueck & Co., 59552 Lippstadt (DE)
(72) Erfinder: Niggemann, Detlef, 33142 Büren-Steinhausen (DE)

(56) Entgegenhaltungen:
- WO-A-00/29255
- WO-A-92/00579
- DE-C1- 4 341 058

## Beschreibung

Die Erfindung betrifft ein Diagnosesystem für eine LED-Leuchte in einem Kraftfahrzeug mit einem Lichtsteuermodul, welches die LED-Leuchte an eine Betriebsspannungsquelle anschaltet und die Stromaufnahme der LED-Leuchte überwacht, und mit einer LED-Leuchte, welche aufweist: eine LED-Matrix, bestehend aus mehreren miteinander verschalteten LED, eine Kontrollschaltung zur Ansteuerung und Überwachung der LED und eine Diagnoseschaltung, die im Fehlerfall ein Fehlersignal erzeugt.

Ein derartiges Diagnosesystem ist im Stand der Technik allgemein bekannt.

Beleuchtungseinrichtungen werden in immer mehr Fahrzeugen über ein Lichtsteuermodul geschaltet. Eine Lichtsteuereinrichtung für ein Kraftfahrzeug zeigt die DE 43 41 058 C1, wobei dieses Beispiel zeigt, daß eine solche Einrichtung sehr komplex ausgeführt sein kann. So ist hier sowohl das Lichtsteuermodul als auch das Leuchtenmodul als "intelligente", d. h. mit einem Mikrorechner versehene, Baugruppe ausgeführt, wodurch eine solche Lichtsteuereinrichtung recht kostenaufwendig ist. Gerade in der Kraftfahrzeugtechnik werden aber aus Kostengründen besonders einfach ausgestaltete Ausführungen von Lichtsteuereinrichtungen bevorzugt.

Zumeist weist ein Lichtsteuermodul eine Einrichtung zur Stromkontrolle auf, die z. B. bei angesteuerten Glühlampen dem Fahrer anzeigt, ob eine Glühlampe gewechselt werden muß. Problematisch ist dies bei der Ansteuerung der in Kraftfahrzeugen verwendeten Leuchten auf LED-Basis, die wegen ihrer Ansprechgeschwindigkeit, Zuverlässigkeit und der Design-Möglichkeiten Glühlampen zunehmend ersetzen. Um die vom Gesetzgeber geforderten Lichtwerte zu erfüllen, ist es notwendig, mehrere LED gleichzeitig anzusteuern. Bekanntermaßen werden hierzu Reihen- und Parallelschaltungen verwendet. Die Ansteuerung erfolgt durch das Lichtsteuermodul, das die Stromaufnahme der Leuchte auf Kurzschluß und Leerlauf überwacht. Hierbei ergibt sich folgendes Problem: Bei Einsatz einer LED-Leuchte kann das Lichtsteuermodul durch Überwachung der Stromaufnahme den Ausfall einer einzelnen LED (oder LED-Reihe) wegen der zu berücksichtigenden Toleranzen und ggf. einer Doppelverwendung von einzelnen LED in unterschiedlichen Lichtfunktionen nicht erkennen. Innerhalb der Leuchte ist eine derartige Diagnose jedoch mit einem geringen Aufwand möglich.

Um diese Diagnosedaten an das Lichtsteuermodul zu geben, ist es möglich, an der LED-Leuchte einen Diagnoseausgang vorzusehen, der über eine Diagnoseleitung mit dem Lichtsteuermodul verbunden ist. Ein solcher Aufbau erweist sich dabei aber als recht kostenaufwendig.

Der Verkabelungsaufwand für eine zusätzliche Diagnoseleitung je LED-Leuchte verursacht Mehrkosten; dies gilt ebenso für Bauteile zur Ausgabe der Diagnosesignale (Ausgangstreiber, evtl. sogar ein Mikroprozessor) innerhalb der LED-Leuchte, wobei diese Mehrkosten sogar dann anfallen, wenn in einem Fahrzeug die Diagnosemöglichkeit gar nicht genutzt werden soll.

Es ist daher die Aufgabe der Erfindung, ein Diagnosesystem für eine LED-Leuchte in einem Kraftfahrzeug zu schaffen, welches besonders einfach und kostengünstig im Aufbau ist.

Diese Aufgabe wird erfindungsgemäß dadurch gelöst, daß im Fehlerfall die Diagnoseschaltung die Stromaufnahme der LED-Leuchte mittels einer schaltbaren Stromsenke in Abhängigkeit von der Art des aufgetretenen Fehlers moduliert und daß das Lichtsteuermodul den modulierten Strom in ein Spannungssignal wandelt und aus dem Spannungssignal die Art des aufgetretenen Fehlers erkennt.

Die erfindungsgemäße Diagnoseeinrichtung benötigt somit vorteilhafterweise keine eigene Diagnoseleitung, da die Diagnoseinformation durch eine Strommodulation auf der Versorgungsleitung der LED-Leuchte erfolgt.

Überdies ist der Aufwand an Bauteilen zur Erzeugung, Übermittlung und Auswertung der Diagnoseinformation in der LED-Leuchte und im Lichtsteuermodul äußerst gering. So werden keine speziellen Aus- und Eingänge für die Diagnoseinformation mehr benötigt.

Weitere vorteilhafte Ausgestaltungen und Weiterbildungen des erfindungsgemäßen Diagnosesystems gehen aus den Unteransprüchen hervor.

So kann der modulierte Ruhestrom vorteilhaft über einen in die Versorgungsleitung geschalteten Widerstand in ein Spannungssignal gewandelt werden, welches durch einen Eingang der Schalt- und Auswertelogik erfaßt und durch die Schalt- und Auswertelogik hinsichtlich der Art des aufgetretenen Fehlers ausgewertet wird.

Vorteilhaft ist, wenn das Diagnosesignal eine Rechteckfrequenz mit definierter Pulsweite ist. Durch Zuordnen einer bestimmten Frequenz zu jedem möglichen Fehler läßt sich eine einfache Codierung der Fehler erreichen. Hierbei läßt sich sowohl aus der Frequenz als auch aus dem Mittelwert der Signalspannung das Diagnosedatum decodieren.

Ebenfalls von Vorteil ist, daß sich eine solche fehlerabhängige Modulation auch in einer LED-Leuchte "ohne Intelligenz", also ohne eigenen Mikrorechner, realisieren läßt, wodurch die LED-Leuchte besonders kostengünstig ausführbar ist. Lediglich für die Schalt- und Auswertelogik des Lichtsteuermoduls ist ein Mikrorechner vorzusehen.

Weiterhin ist es vorteilhaft, dem Fahrer aufgetretene Fehler in einem Anzeigeelement anzuzeigen und darüber hinaus diese auch noch für spätere Fehleranalysen in einem nichtflüchtigen Speicher (EEPROM) zu sichern.

Neben dem Ausfall einzelner oder mehrerer LED kann zusätzlich das Auftreten von Temperaturüberschreitungen im Inneren der LED-Leuchte als diagnostizierbarer Fehlerfall vorgesehen werden. Daher ist es vorteilhaft, in der LED-Leuchte einen Temperatursensor vorzusehen.

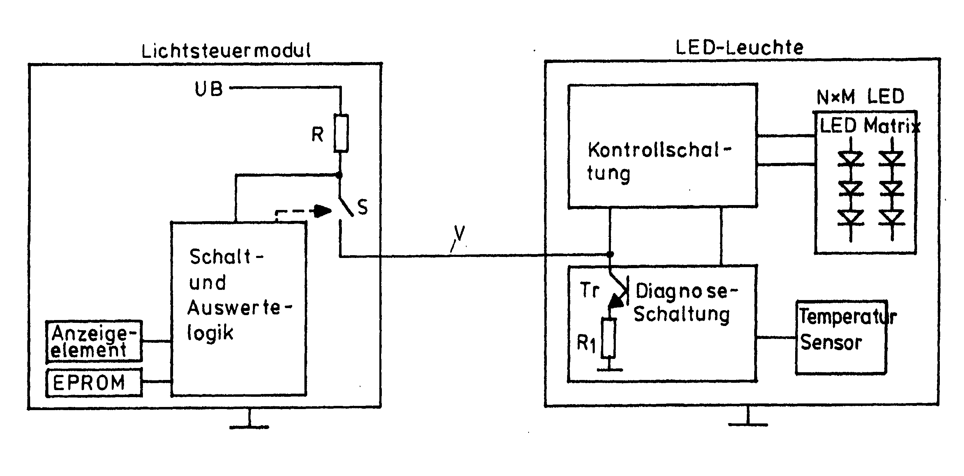

Im folgenden soll ein Ausführungsbeispiel einer erfindungsgemäßen Diagnoseeinrichtung anhand der Zeichnung dargestellt und näher erläutert werden.

Die einzige Figur zeigt eine Prinzipskizze der erfindungsgemäßen Diagnoseeinrichtung.

Hierin sind eine LED-Leuchte und ein Lichtsteuermodul jeweils als Blockschaltbild skizziert.

Die LED-Leuchte weist eine LED-Matrix auf, bestehend aus M parallelen LED-Reihen, welche jeweils aus N in Serie geschalteten LED bestehen (M, N ≥ 1).

Die LED-Matrix wird durch eine Kontrollschaltung sowohl angesteuert als auch überwacht, wobei die Kontrollschaltung auch den Ausfall einzelner LED (bzw. LED-Reihen) erkennen kann und in einem solchen Fall die LED-Matrix vollständig abschaltet.

Mit der Kontrollschaltung sowie mit einem Temperatursensor ist eine Diagnoseschaltung verbunden, die im Fehlerfall die Art des aufgetretenen Fehlers auf erfindungsgemäße Weise dem Lichtsteuermodul signalisiert.

Das Lichtsteuermodul ist mittels einer Versorgungsleitung (V) mit der LED-Leuchte verbunden und schaltet die Versorgungsleitung über einen steuerbaren Schalter (S) und einen sehr niederohmigen Widerstand (R) an die Betriebsspannungsquelle (UB) für die LED-Leuchte an. Durch Auswertung des Spannungsabfalls am Widerstand (R) kann die Schalt- und Auswertelogik eine Unterbrechung oder einen Masseschluß der Versorgungsleitung (V) erkennen; weitergehende Diagnosemöglichkeiten bezüglich interner Fehler der LED-Leuchte sind damit aber nicht möglich.

Solche internen Fehler können insbesondere sein:
- Ausfall einer LED/LED-Reihe
- Ausfall mehrerer LED/LED-Reihen
- Temperaturüberschreitung.

Der Erfindungsgedanke ist nun, in Abhängigkeit von der Art des Fehlers, welcher zum internen Abschalten der LED-Leuchte geführt hat, die Stromaufnahme zu modulieren, so daß das Lichtsteuermodul den Fehler auswerten und z. B. in einem nichtflüchtigen Speicher (EEPROM) speichern und auf einem Anzeigeelement dem Fahrer anzeigen kann. Der Diagnosebetriebszustand wird mit einem Fehlersignal aktiviert, welches entsteht, wenn die Kontrollschaltung die LED-Matrix abschaltet oder der Temperatursensor ein Übertemperatur anzeigendes Signal erzeugt.

Die Modulation des Stroms im Fehlerfall wird durch eine geschaltete Stromsenke (Tr, R₁) realisiert. Dieser modulierte Strom läßt sich im Lichtsteuergerät, an einem Pull-up-Widerstand (R), in ein auswertbares Spannungssignal umwandeln. Als Modulationsverfahren ist eine niederfrequente Pulsweitenmodulation vorteilhaft.

Im folgenden sei die Funktionsweise des erfindungsgemäßen Diagnosesystems erläutert:

Die LED-Leuchte ist mit dem Lichtsteuermodul über die Versorgungsleitung (V) verbunden und wird von diesem über den steuerbaren Schalter (S) eingeschaltet. Im Fehlerfall, wenn die LED-Leuchte erloschen ist und der Spannungswandler der LED-Leuchte angehalten wurde, wird die Diagnoseschaltung aktiviert.

Die Diagnoseschaltung der LED-Leuchte moduliert nun, in Abhängigkeit von der Art des aufgetretenen Fehlers, die Stromaufnahme der LED-Leuchte in Form eines pulsweitenmodulierten Signales auf der Versorgungsleitung (V). Durch Zuordnen einer bestimmten Frequenz zu jedem möglichen Fehler läßt sich eine einfache Codierung der Fehler erreichen, wobei es von besonderem Vorteil ist, wenn das Diagnosesignal eine Rechteckfrequenz mit definierter Pulsweite ist. In diesem Fall kann die Schalt- und Auswertelogik sowohl aus der Frequenz als auch aus dem Mittelwert der Signalspannung das Diagnosedatum decodieren.

Das Lichtsteuergerät hat zu diesem Zeitpunkt erkannt, daß der Betriebsstrom der LED-Leuchte unter einen vorgegebenen Wert gefallen ist und empfängt das Diagnosesignal und wertet dieses aus. Des weiteren speichert es den Fehler in einem nichtflüchtigen Speicher (EEPROM) und stellt diesen auf dem Anzeigeelement dar.

Die Schalt- und Auswertelogik kann somit unterschiedliche Fehler erkennen, diese an den Fahrer melden und speichern.

In weiteren Ausgestaltungen der Erfindung kann eine von der Art des aufgetretenen Fehlers oder der erhaltenen Information abhängige Fehlerreaktion implementiert werden. Gedimmtes Bremslicht als Reaktion auf den Ausfall des Schlußlichtes, Abschalten oder Dimmung als Reaktion auf eine Übertemperatur oder lediglich eine Information über eingeschränkte Funktion.

## Patentansprüche

1. Diagnosesystem für eine LED-Leuchte in einem Kraftfahrzeug mit einem Lichtsteuermodul, welches die LED-Leuchte an eine Betriebsspannungsquelle anschaltet und die Stromaufnahme der LED-Leuchte überwacht, und mit einer LED-Leuchte, welche aufweist: eine LED-Matrix, bestehend aus mehreren miteinander verschalteten LED, eine Kontrollschaltung zur Ansteuerung und Überwachung der LED und eine Diagnoseschaltung, die im Fehlerfall ein Fehlersignal erzeugt, **dadurch gekennzeichnet, daß** im Fehlerfall die Diagnoseschaltung die Stromaufnahme der LED-Leuchte mittels einer schaltbaren Stromsenke (Tr, R₁) in Abhängigkeit von der Art des aufgetretenen Fehlers moduliert und daß das Lichtsteuermodul den modulierten Strom in ein Spannungssignal wandelt und aus dem Spannungssignal die Art des aufgetretenen Fehlers erkennt.

2. Diagnosesystem nach Anspruch 1, **dadurch gekennzeichnet, daß** das Lichtsteuermodul die LED-Leuchte über einen Widerstand (R) mit der Betriebsspannungsquelle (UB) verbindet und daß das Lichtsteuermodul das Spannungssignal an diesem Widerstand (R) auswertet.

3. Diagnosesystem nach Anspruch 1, **dadurch gekennzeichnet, daß** die LED-Leuchte einen Temperatursensor aufweist und daß die Diagnoseschaltung ein eine Temperaturüberschreitung signalisierendes Fehlersignal erzeugt, wenn der Ausgangswert des Temperatursensors jenseits eines vorgegebenen Grenzwertes liegt.

4. Diagnosesystem nach Anspruch 1, **dadurch gekennzeichnet, daß** das Lichtsteuermodul den erkannten Fehler in einem nichtflüchtigen Speicher (EEPROM) speichert.

5. Diagnosesystem nach Anspruch 1, **dadurch gekennzeichnet, daß** das Lichtsteuermodul den erkannten Fehler auf einem Anzeigeelement darstellt.

6. Diagnosesystem nach Anspruch 1, **dadurch gekennzeichnet, daß** die Diagnoseschaltung die Art des aufgetretenen Fehlers mittels einer Rechteckfrequenz mit definierter Pulsweite codiert.

## Claims

1. Diagnostic system for a LED lamp in a motor vehicle containing a light control module which connects the LED lamp with an operating power source and monitors the power consumption of the LED lamp, and a LED lamp providing the following features: a LED matrix consisting of several interconnected LEDs, a control circuit for LED actuation and monitoring, and a diagnostic circuit which responds to faults by generating a fault signal, wherein, following a fault, the diagnostic circuit modulates the power consumption of the LED lamp by means of a controllable current sink (Tr, R₁), adapting the modulation to the type of fault encountered, and wherein the light control module transforms the modulated current into a voltage signal which it uses to recognize the type of fault encountered.

2. Diagnostic system as in claim 1, wherein the light control module uses a resistor (R) to connect the LED lamp with the operating power source (UB), and wherein the light control module uses the resistor (R) to interpret the voltage signal.

3. Diagnostic system as in claim 1, wherein the LED lamp features a temperature sensor, and wherein the diagnostic circuit generates a fault signal indicative of out-of-range temperature if the value output by the temperature sensor is beyond a specified limit.

4. Diagnostic system as in claim 1, wherein the light control module saves the fault encountered to a non-volatile memory (EEPROM).

5. Diagnostic system as in claim 1, wherein the light control module outputs the fault encountered to a display unit.

6. Diagnostic system as in claim 1, wherein the diagnostic circuit codes the fault encountered as a square-wave pulse of a defined pulse width.

## Revendications

1. Système de diagnostic pour un feu à LED dans un véhicule avec un module de commande d'éclairage, lequel connecte le feu à LED à une source de tension d'alimentation et surveille la consommation du feu à LED, et avec un feu à LED, lequel présente : une matrice à LED, composée de plusieurs LED connectées les unes aux autres, un circuit de contrôle destiné au pilotage et à la surveillance des LED et un circuit de diagnostic, qui génère un signal d'erreur en cas de défaut, **caractérisé en ce qu'**en cas de défaut, le circuit de diagnostic module la consommation du feu à LED à l'aide d'un consommateur de courant commutable (Tr, R1) en fonction de la nature du défaut apparu et **en ce que** le module de commande d'éclairage transforme le courant modulé en un signal de tension et détecte la nature du défaut apparu à partir du signal de tension.

2. Système de diagnostic selon la revendication 1, **caractérisé en ce que** le module de commande d'éclairage relie le feu à LED à la source de tension d'alimentation (UB) par une résistance (R) et **en ce que** le module de commande d'éclairage analyse le signal de tension sur cette résistance (R).

3. Système de diagnostic selon la revendication 1, **caractérisé en ce que** le feu à LED présente un capteur de température et **en ce que** le circuit de diagnostic génère un signal d'erreur - signalant un dépassement de température - lorsque la valeur initiale du capteur de température est située au-delà d'une valeur limite prédéfinie.

4. Système de diagnostic selon la revendication 1, **caractérisé en ce que** le module de commande d'éclairage enregistre le défaut détecté dans une mémoire non volatile (EEPROM).

5. Système de diagnostic selon la revendication 1, **caractérisé en ce que** le module de commande d'éclairage affiche le défaut détecté sur un élément d'affichage.

6. Système de diagnostic selon la revendication 1, **caractérisé en ce que** le circuit de diagnostic code la nature du défaut apparu à l'aide d'une fréquence rectangulaire avec une largeur d'impulsion définie.
